# EUROPÄISCHE PATENTSCHRIFT

(11) **EP 1 886 795 B1**
(45) Veröffentlichungstag und Bekanntmachung des Hinweises auf die Patenterteilung: **05.10.2011**
(21) Anmeldenummer: 07113972.9
(22) Anmeldetag: 08.08.2007
(51) Int. Cl.: B29D 29/10, B66B 7/06, F16G 5/06

(54) **Riemen für eine Aufzuganlage und Verfahren zur Herstellung eines solchen Riemens**
Lift belt for a lift system and method for manufacturing such a lift belt
Courroie sans fin pour un élévateur et procédé de fabrication d'une telle courroie sans fin

(30) Priorität: 11.08.2006 EP 06118816
(43) Veröffentlichungstag der Anmeldung: 13.02.2008
(60) Teilanmeldung: 10183786.2
(73) Patentinhaber: Inventio AG, 6052 Hergiswil (CH)
(72) Erfinder: Ach, Ernst, 6030 Ebikon (CH)

(56) Entgegenhaltungen:
- WO-A2-03/008840
- DE-A1- 3 527 640
- DE-A1- 10 222 015
- DE-A1- 19 851 761
- DE-A1-102004 030 722
- DE-B- 1 110 397
- US-A- 2 439 043
- US-A- 3 948 113
- US-A- 5 653 656

## Beschreibung

Die vorliegende Erfindung betrifft eine Aufzugsanlage mit einem Riemen, einen Riemen für eine solche Aufzuganlage sowie ein Verfahren zur Herstellung eines solchen Riemens.

Eine Aufzugsanlage umfasst eine Aufzugskabine und in der Regel ein Gegengewicht, die in einem Aufzugsschacht oder entlang freistehender Führungseinrichtungen bewegbar sind. Zum Erzeugen der Bewegung weist die Aufzugsanlage mindestens einen Antrieb mit mindestens je einem Treibrad auf, das über einen oder mehrere Riemen die Aufzugkabine und das Gegengewicht trägt und/oder die erforderlichen Antriebskräfte auf diese überträgt. Ein Treibrad kann dabei in an sich bekannter Weise als Treibscheibe oder gleichermaßen als Rad mit kleinerem Durchmesser, insbesondere auch als eine Abtriebswelle des Antriebs selbst, ausgebildet sein.

Die Aufzugkabine und das Gegengewicht können über den- bzw. dieselben Riemen verbunden sein, die über das Treibrad bzw. die Treibräder umgelenkt werden. Alternativ können die Aufzugkabine und das Gegengewicht auch jeweils über separate Riemen mit dem bzw. den Treibrädern derart gekoppelt sein, dass sich das Gegengewicht hebt, wenn die Aufzugkabine abgesenkt wird und umgekehrt. Während Treibräder Zugkräfte auf die Antriebsriemen ausüben, um die Aufzugkabine bzw. das Gegengewicht anzuheben, werden reine Tragriemen nicht über Treibräder, sondern lediglich über Umlenkelemente, insbesondere drehbare oder feste Umlenkrollen umgelenkt und nehmen einen konstanten Teil der Gewichtskraft der Aufzugkabine und des Gegengewichts auf. Bevorzugt sind Antriebs- und Tragriemen jedoch identisch.

Ein Riemen nach der vorliegenden Erfindung kann für jede der oben beschriebenen Funktionen eingesetzt werden, also gleichermaßen als Antriebs- und/oder Tragriemen, als einer von mehreren Riemen und/oder als Riemen, der an der Aufzugkabine und/oder dem Gegengewicht befestigt ist. Dementsprechend werden Treibräder und Umlenkrollen im Folgenden allgemein als Riemenräder bezeichnet.

Solche Riemen für Aufzuganlagen umfassen üblicherweise einen Riemenkörper aus Elastomeren. Um die Zugkräfte zu übertragen, sind in dem Riemenkörper Zugträger in Form von Stahl- und/oder Kunststoff-Corden eingebettet, die bevorzugt aus ein- oder mehrfach verseilten Drähten bzw. Kunststofffasern oder Kunststoffgarnen aufgebaut sind. Sie sind vorteilhaft in der neutralen Faser des Riemenquerschnitts angeordnet, in der bei einer Umschlingung eines Riemenrads keine Zug- oder Druckspannungen auftreten.

US 2439043 offenbart ein Verfahren zur Herstellung eines endlosen Riemens. Dabei werden voneinander beabstandete Rillen in länglicher Richtung gebildet. Diese Rillen werden mit Kabeln ausgelegt.

DE 19851761 A1 offenbart einen Antriebsriemen mit einem trapezförmigen Basiskörper. Dabei liegen Zugträger auf dem Basiskörper, und eine Deckschicht aus Elastomer deckt die Zugträger ab.

DE 3527640 A1 offenbart einen Antriebsriemen. Der Riemen besteht aus mindestens zwei miteinander verbundenen Teilriemen. Eine Verbindungsebene liegt dabei parallel zu einem Rücken des entstehenden Riemens.

DE 1110397 B offenbart ein Verfahren zum Formen eines biegsamen Profiltreibriemens. Dabei werden gleiche Hälften zu einem Riemen zusammengefügt. Die Hälften umschliessen in Längsrichtung innerhalb des Körpers verlaufende Seile. Zwischen den Seilen wird eine Längsnut gebildet, bevor der Riemen verformt wird.

Um die Zugträger bei der Herstellung lagerichtig im Riemen anzuordnen, ist es beispielsweise aus der WO 2006/000500 A1 bekannt, die in Form von Stahl- und/oder Kunststoff-Corden vorhandenen Zugträger einem ersten Formrad zuzuführen, auf das gleichzeitig aus einem Extruder ein plastifizierbarer Kunststoff, insbesondere PU, gegeben wird. Das Formrad weist eine Umfangsfläche mit pfeilförmig angeordneten Querrippen auf. Aufgrund der Drahtspannung werden die Zugträger dabei auf die Kopfflächen der Querrippen des Formrades gedrückt. Beim Extrudieren des plastifizierbaren Kunststoffs entsteht ein erster Teilriemen, der an seiner Unterseite durch die pfeilförmigen Querrippen des Formrades gebildete Nuten aufweist in deren Bereich die Zugträger frei liegen. Dieser Teilriemen wird einem zweiten Formrad zugeführt, wobei zwischen zweiten Formrad und der Unterseite des ersten Teilriemens aus einem Extruder wiederum ein plastifizierbarer Kunststoff, insbesondere PU, gegeben wird, der die Nuten des ersten Teilriemens ausfüllt, dabei die Zugträger umschließt und einen thermisch mit der Unterseite des ersten Teilriemens fest verbundenen zweiten Teilriemen bildet. Der Riemen wird somit zweiteilig aus zwei Teilriemen gleichen Materials gebildet, wobei die Zugträger in der Kontaktebene beider Teilriemen angeordnet sind, in der die beiden Teilriemen form- und materialschlüssig miteinander verbunden sind.

Dieses Herstellungsverfahren bzw. die nach diesem Verfahren hergestellten Aufzugriemen weisen mehrere Nachteile auf.

Die Position der einzelnen Zugträger innerhalb des Riemens wird durch eine Zuführeinrichtung definiert, die die Zugträger vor deren Auflaufen auf das erste Formrad führt. Während des Extrudiervorgangs, d. h. während die Zugträger das erste Formrad umlaufen, ist die seitliche Führung der Zugträger nur durch Reibschluss der die Zugträger bildenden Corde mit dem ersten Formrad bewirkt. Hierzu ist einerseits eine erhebliche Drahtspannung der

Zugträger erforderlich, um die notwendige Normalkraft zum Aufbau des Reibschlusses zu erzeugen. Dies hat zur Folge, dass die Zugträger nicht spannungsfrei in den Riemen eingeschlossen werden können. Selbst bei hoher Drahtspannung kann jedoch eine exakte seitliche Position der Zugträger innerhalb des Riemens nicht gewährleistet werden.
Der Aufbau aus zwei materialgleichen Teilriemen ist zwar zur Ausbildung einer dauerhaften Verbindung vorteilhaft, bedingt jedoch, dass der Riemen sowohl auf seiner Traktionsfläche, mit der er mit einem Treibrad reib- und/oder formschlüssig zusammenwirkt, um Zugkräfte in den Riemen einzuleiten, als auch auf seiner der Traktionsfläche abgewandten Riemenrückseite, mit der er Umlenkelemente umschlingt, gleiche Reibwerte aufweist. Da die Traktionsfläche zur Erhöhung der Traktions- bzw. Treibfähigkeit des Riemens in der Regel einen hohen Reibbeiwert aufweist, erhöht sich nachteilig auch die Reibung in der Riemenrückseite bei Umlenkung des Riemens, wodurch beispielsweise die seitliche Führung des Riemens auf einer Umlenkrolle erschwert wird.

Eine Aufgabe der vorliegenden Erfindung ist es daher, ein Verfahren zur Herstellung eines gattungsgemäßen Riemens für eine Aufzuganlage anzugeben, bei dem die lagerichtige Anordnung von Zugträgern im Riemen zuverlässig realisiert wird. Eine andere Aufgabe der vorliegenden Erfindung ist es, einen gattungsgemäßen Riemen für eine Aufzuganlage zur Verfügung zu stellen, bei dem die Belastung bei einer Umlenkung vermindert ist.

Zur Lösung der Aufgabe wird in Anspruch 1 ein Verfahren zur Herstellung eines Riemens für eine Aufzuganlage vorgeschlagen. In Anspruch 15 wird ein Riemen für eine Aufzuganlage unter Schutz gestellt, der nach einem erfindungsgemäßen Verfahren hergestellt ist.

Ein Verfahren zur Herstellung eines Riemens für eine Aufzuganlage nach der vorliegenden Erfindung umfasst die folgenden Schritten: Herstellen eines ersten Teilriemens, der eine Anordnung von einer oder mehreren Rillen in Längsrichtung des Riemens aufweist, Anordnen von einem Zugträger in wenigstens einer Rille der Anordnung und Verbinden eines zweiten Teilriemens mit dem ersten Teilriemen derart, dass der wenigstens eine Zugträger im Inneren des Riemens aufgenommen ist.

Durch die Anordnung der Zugträger in Rillen des ersten Teilriemens kann mit einfachen Mitteln eine lagerichtige Anordnung der Zugträger während des Herstellungsvorganges sichergestellt werden. Denn die Zugträger werden durch die Rillen in Querrichtung des Riemens formschlüssig geführt, so dass ihre lagerichtige Anordnung zueinander und zum restlichen Riemen durch die Geometrie der Rillen, insbesondere deren Breiten und Abstände zueinander, vorgegeben werden kann.

Bevorzugt wird dabei in jeder Rille ein Zugträger angeordnet. Gleichermaßen können jedoch auch mehrer Zugträger in derselben Rille angeordnet werden, womit wenigstens die lagerichtige Anordnung dieser Zugträger zu weiteren Zugträgeranordnungen in anderen Rillen vorgegeben ist. Umgekehrt muss nicht in jeder Rille des ersten Teilriemens ein Zugträger angeordnet werden. So können beispielsweise ein einheitlicher erster Teilriemen mit einer unterschiedlichen Anzahl von Zugträgern bestückt und somit aus einem Halbzeug mehrere unterschiedliche Riemen mit verschiedenen Zugfestigkeiten hergestellt werden.

Neben den Rillen zur Aufnahme von Zugträgern kann der erste Teilriemen auch weitere Aussparungen und/oder Ausformungen aufweisen, die mit entsprechenden Ausformungen bzw. Aussparungen im zweiten Teilriemen formschlüssig zusammenwirken und so die Verbindung zwischen beiden Teilriemen verstärken.

Die Zugträger können ohne Vorspannung in die Rillen des ersten Teilriemens eingelegt werden. Insbesondere damit ist es möglich, spannungsarme Riemen herzustellen. Während bei dem aus der WO 2006/000500 A1 bekannten Herstellungsverfahren solche Zugträger nicht zuverlässig in der gewünschten Position auf dem Formrad und damit innerhalb des Riemens fixiert würden, bewirken die erfindungsgemäßen Rillen eine zuverlässige Festlegung der Lage der Zugträger in Riemenquerrichtung.

Bevorzugt werden die Zugträger in die Rillen des ersten Teilriemens eingebracht, bevor der zweite Teilriemen mit diesem verbunden wird und so die Zugträger vollständig im Riemen einschließt. Gleichermaßen können die Zugträger jedoch auch zunächst auf dem zweiten Teilriemen angeordnet werden. Durch Verbinden mit dem ersten Teilriemen rückt dieser die Zugträger dann aufgrund seiner Rillen, gegebenenfalls nur noch geringfügig und unter Aufgabe einer vorher angelegten Vorspannung in den Zugträgern, in ihre endgültige Lage.

Bevorzugt wird der erste Teilriemen aus einem thermoplastischen Kunststoff hergestellt. Dabei kann es sich beispielsweise um Polyamid (PA), Polypropylen (PP), Polyethylen (PE), Polycarbonat (PC) oder Polyvinylchlorid (PVC) handeln. Vorteilhaft kann es sich bei dem thermoplastischen Kunststoff auch um ein Polyblend, i.e. eine Mischung aus zwei oder mehr verschiedenen Kunststoffen handeln. Der erste Teilriemen kann auch ein Gewebe aus einem dieser thermoplastischen Kunststoffe umfassen, das bevorzugt in einem weiteren dieser thermoplastischen Kunststoffe eingebettet bzw. von diesem durchtränkt sein kann.

Dieser erste, bevorzugt eher harte, Teilriemen führt die einzelnen Zugträger zuverlässig in seinen Rillen. In einer weiteren Ausgestaltung des erfindungsgemäßen Herstellungsverfahrens kann der erste Teilriemen nach dem Zusammenfügen mit dem zweiten Teilriemen durch Erwärmung nochmals (teil)plastifiziert werden, so dass die Zugträger, die dann auch vom zweiten Teilriemen teilweise umschlossen und derart in ihrer Lageanordnung zueinander fixiert sind, sich besser in die insoweit teilweise verformbaren Rillen des ersten Teilriemens einfügen.

Die Rillen eines erfindungsgemäßen Riemens können durch thermische und/oder mechanische Verformung des ersten Teilriemens ausgebildet werden. So können sie schon bei der Urformung des ersten Teilriemens ausgebildet und/oder anschließend durch spanende Bearbeitung oder Verformung unter erneuter Erwärmung des ersten Teilriemens, also beispielsweise durch Fräsen, Warmdrücken, Rollen oder dergleichen hergestellt werden.

Die Rillen eines erfindungsgemäßen Riemens sind bevorzugt V- oder U-förmig ausgebildet. Dies zentriert vorteilhaft die einzelnen Zugträger, die in der Regel einen rotatonssymmetrischen, insbesondere einen im wesentlichen runden Querschnitt aufweisen, im unteren geschlossenen Ende der Rillen. Vorteilhaft können dabei Zugträger unterschiedlicher Durchmesser in dem gleichen ersten Teilriemen angeordnet werden, wobei die Zugträger je nach Durchmesser unterschiedlich tief in die V- oder U-förmigen Rillen eintreten. In einer anderen Variante können die Rillen auch im Wesentlichen der (Teil)außenkontur der Zugträger entsprechen. Vorteilhaft sind die Rillen so ausgebildet, dass die darin angeordneten Zugträger in oder nahe der neutralen Faser des Querschnitts des gesamten Riemens angeordnet sind, in der bei einer Umschlingung eines Riemenrades, insbesondere eines Treibrades, keine oder nur geringe Zug- oder Druckspannungen auftreten.

Vorteilhafterweise sind die Rillen eines erfindungsgemäßen Riemens so ausgebildet, dass die Zugträger nicht in ihrer ganzen Höhe innerhalb der Rillen angeordnet sind, sondern über diese in den zweiten Teilriemen hinausragen. Auf diese Weise vergrößert sich die Traktionsfläche zwischen den Zugträgern und dem zweiten Teilriemen, was besonders vorteilhaft ist, wenn dieser zum Eingriff mit einem Treibrad der Aufzuganlage vorgesehen ist, so dass die Zugkräfte von dem Treibrad über den zweiten Teilriemen auf die Zugträger übertragen werden. Insofern ist es zu bevorzugen, dass die Rillen so flach sind, dass sie eine lagerichtige Anordnung der Zugträger sicherstellen, wobei die Zugträger jedoch soweit wie möglich in den zweiten Teilriemen hineinragen.

Die Zugträger können als Einfachdraht ausgebildet sein oder aus ein- oder mehrfach verseilten Litzen oder Seilen bestehen, wobei letztere aus Stähldrähten oder Kunststofffasern hergestellt sein können. Verseilte Zugträger können zusätzlich Seelen, insbesondere aus Kunststoff, umfassen. Aufgrund der sicheren Positionierung der einzelnen Zugträger während des Herstellungsprozesses in den Rillen können dabei neben verwindungsarmen Seilen auch Seile verwendet werden, die sich aufgrund der Verseilung beispielsweise in Querrichtung des Riemens verdrillen wollen.

Bevorzugt wird der zweite Teilriemen aus einem Elastomer, beispielsweise Polyurethan, Polychloropren und/oder Ethylen-Propylen-Dien-Kautschuk, hergestellt. Damit wird vorteilhaft ein Riemen geschaffen, der auf seinen beiden Seiten unterschiedliche Materialien aufweist, die jeweils an die unterschiedlichen Erfordernisse angepasst sein können. So kann für den ersten Teilriemen ein Material gewählt werden, das eine stabile Führung der Zugträger in den Rillen sicherstellt und im Übrigen eine ausreichende Flexibilität aufweist, wenn es als kurvenäußeres Segment um ein Riemenrad umgelenkt wird. Für den zweiten Teilriemen kann ein Material gewählt werden, das besonders geeignet für die Übertragung der Zugkräfte von dem Treibrad auf die Zugträger ist. Insbesondere ist hier ein Material zu bevorzugen, dass eine ausreichende Adhesion gegenüber den Zugträgern aufbaut, eine gewünschte Traktionsfähigkeit mit einem Treibrad aufweist und gleichzeitig die bei der Kraftübertragung auftretenden Spannungen und Verformungen toleriert. Als besonders günstig haben sich dabei Elastomere mit einer Härte von 70 bis 100 Shore (A), bevorzugt 75 bis 95 Shore (A) und besonders bevorzugt eine Härte von 80 bis 85 Shore (A) erwiesen.

Vorteilhafterweise wird der zweite Teilriemen mit dem ersten Teilriemen mittels Extrusion und/oder Kleben verbunden. Sofern der zweite Teilriemen auf den ersten aufextrudiert wird, ergibt sich ein besonders einfacher Herstellungsprozess. Gleichzeitig verbinden sich erster und zweiter Teilriemen fest und dauerhaft. Vorteilhaft umschließt der zweite Teilriemen bei der Extrusion die Zugträger über den gesamten Bereich ihrer Umfangsflächen, der sich nicht in den Rillen des ersten Teilriemens abstützt, was die Verbindung zwischen erstem und zweitem Teilriemen und Zugträgern verstärkt.

Gleichermaßen kann der zweite Teilriemen auch als Halbzeug vorgefertigt und auf den ersten Teilriemen aufgeklebt werden. Dabei weist der vorgefertigte zweite Teilriemen vorteilhafterweise Aussparungen auf, die zu den in den Rillen angeordneten Zugträgern im Wesentlichen komplementär sind. Bevorzugt können diese Aussparungen etwas kleiner als die Zugträger sein, so dass die Zugträger beim Zusammenfügen der beiden Teilriemen zwischen diesen unter Verformung des zweiten Teilriemens fest eingebunden werden.

In einer bevorzugten Ausführung der vorliegenden Erfindung wird auf der dem zweiten Teilriemen abgewandten Seite des ersten Teilriemens ein dritter Teilriemen angeordnet, der vorteilhaft aus einem thermoplastischen Kunststoff wie beispielsweise Polyamid (PA), Polypropylen (PP), Polyethylen (PE), Polycarbonat (PC) oder Polyvinylchlorid (PVC) hergestellt ist. Auch bei diesem thermoplastischen Kunststoff kann es sich um ein Polyblend, i.e. eine Mischung aus zwei oder mehr verschiedenen Kunststoffen handeln. Gleichermaßen kann der dritte Teilriemen auch ein Gewebe aus einem dieser thermoplastischen Kunststoffe umfassen.

Ein solcher dreiteiliger Aufbau ermöglicht es, für die jeweilige Funktion der einzelnen Teilriemen jeweils andere, optimal geeignete Materialien zu verwenden. So kann das Material des ersten, dann als Zwischenschicht fungierenden, Teilriemens auf die Führung der Zugträger, i.e. die stabile und leichte Herstellbarkeit geeigneter Rillen optimiert sein, das Material des zweiten Teilriemens mit Blick auf die Übertragung der Zugkräfte von einem Treibrad auf die Zugträger, und/oder der dritte Teilriemen kann auf eine möglichst gute Umlenkbarkeit, also insbesondere einen niedrigen Reibwert, eine hohe Flexibilität und/oder eine hohe Abriebfestigkeit ausgelegt sein.

Vorteilhafterweise kann die dem ersten Teilriemen abgewandte Seite des zweiten Teilriemens eine Traktionsfläche zum Zusammenwirken mit einem Treibrad der Aufzuganlage bilden. Hierzu kann diese Traktionsfläche eine Beschichtung zum Zusammenwirken mit dem Treibrad der Aufzuganlage aufweisen.

Mittels einer solchen Beschichtung kann einerseits ein definierter Reibwert, der sich vom Reibwert des Materials des zweiten Teilriemens unterscheiden kann, für den Kraftschluss mit dem Treibrad zur Verfügung gestellt werden. Gleichermaßen können andere Oberflächeneigenschaften, beispielsweise die Abriebfestigkeit beeinflusst werden. So kann ein insgesamt eher weicher und insofern gut umlenkbarer zweiter Teilriemen mit einer dünnen harten Beschichtung versehen werden, die abriebfest ist.

Zur Erhöhung des Anpressdruckes an ein Treibrad und damit der Traktions- bzw. Treibfähigkeit bei gleicher Radialkraft und damit gleicher Lagerbelastung und Riemenspannung kann die Traktionsfläche mit Keilrippen versehen sein. Gleichzeitig führen solche Keilrippen den Riemen vorteilhaft in Querrichtung auf einem Treibrad. Bevorzugt weisen die Rippen einen keilförmigen Querschnitt mit einem Flankenwinkel von 60° bis 120° auf, wobei der Bereich von 80° bis 100° zu bevorzugen ist. Als Flankenwinkel ist der zwischen beiden Seitenflächen (Flanken) einer keilförmigen Rippe vorhandene Winkel bezeichnet. Dieser Bereich hat sich als idealer Kompromiss zwischen einer hohen Traktionsfähigkeit und der Gefahr eines Verklemmens des Riemens in der Treibrad herausgestellt.

Die der Traktionsfläche abgewandte Seite des Riemens, also beispielsweise eine Oberfläche des ersten oder - falls vorhanden - dritten Teilriemens kann eine Gleitfläche zum Zusammenwirken mit einem Umlenkelement der Aufzuganlage bilden. Durch entsprechende Materialwahl und/oder eine Beschichtung der Gleitfläche kann die Belastung bei der Umlenkung vermindert werden. Insbesondere kann die Abriebfestigkeit und/oder der Reibwert der Gleitfläche gezielt eingestellt werden. So weist die Gleitfläche eines ersten oder dritten Teilriemens aus Polyamid, Polyethylen und/oder Polyester in einer bevorzugten Ausführung einen Reibwert von höchstens 0,35, bevorzugt von höchstens 0,3 und besonders bevorzugt einen Reibwert kleiner oder gleich 0,25 auf.

Ein nach einem erfindungsgemäßen Verfahren hergestellter Riemen für eine Aufzuganlage umfasst einen ersten Teilriemen, der eine Anordnung von Rillen, insbesondere in Längsrichtung des Riemens, aufweist, einen Zugträger in wenigstens einer Rille der Rillenanordnung und einen zweiten Teilriemen, der mit dem ersten Teilriemen derart verbunden ist, dass der Zugträger im Inneren des Riemens aufgenommen ist.

Ein solcher Riemen ist einfach herzustellen, wobei die lagerichtige Anordnung der Zugträger innerhalb des Riemens vorteilhaft durch die Rillen bewirkt wird. Sind die Materialien des ersten und zweiten bzw. eines gegebenenfalls vorhandenen dritten Teilriemens unterschiedlich, so können bei einem solchen Riemen beispielsweise die Reibwerte, die Abriebfestigkeit, die Schlagzähigkeit und/oder ähnliche Eigenschaften der einzelnen Teilriemen und einer von diesen gebildeten Traktions- und/oder Gleitfläche vorgegeben werden. So kann beispielsweise für den ersten bzw. dritten Teilriemen ein Material wie beispielsweise Polyamid, Polyester oder Polyethylen mit niedrigem Reibwert von vorzugsweise höchstens 0,3 gewählt werden. Ein solcher Riemen, der mit seiner vom ersten bzw. dritten Teilriemen gebildeten Gleitfläche Umlenkelemente wie beispielsweise Umlenkrollen teilweise oder mehrfach umschlingt, erzeugt bei seiner Umlenkung nur geringe Reibkräfte, was insbesondere bewirkt, dass die seitliche Führung des Riemens auf einer Umlenkrolle weniger Probleme verursacht, und dass die für die Aufzuganlage erforderliche Antriebsleistung reduziert wird.

Wenn vorteilhafterweise nicht nur die Traktionsfläche, sondern auch die Gleitfläche eine oder mehrere Rippen aufweist, kann der Riemen auch bei Umlenkungen um Riemenräder, bei denen der Riemen das Riemenrad mit seiner Gleitfläche berührt, in Querrichtung geführt werden, was ein seitliches Herablaufen des Riemens von solchen Riemenrädern verhindert.

Die Teilriemen können verschiedene Farben aufweisen, um ein korrektes Auflegen des Riemens zu gewährleisten. Hierzu können beispielsweise Traktions- und Gleitfläche unterschiedlich eingefärbt oder beschichtet sein. Gleichermaßen können die Teilriemen aus Materialien unterschiedlicher Farbe bestehen.

Weitere Aufgaben, Merkmale und Vorteile ergeben sich aus den Unteransprüchen und den nachfolgend beschriebenen Ausführungsbeispiele. Hierzu zeigt:
- Fig. 1: einen Querschnitt durch einen Riemen nach einer Ausführung der vorliegenden Erfindung;
- Fig. 2: einen Querschnitt durch den ersten Teilriemen aus Fig. 1 vor der Anordnung der Zugträger; und
- Fig. 3: einen zu einer Aufzugskabinenfront parallelen Schnitt durch eine Aufzugsanlage mit einem Riemen nach einer Ausführung der vorliegenden Erfindung.

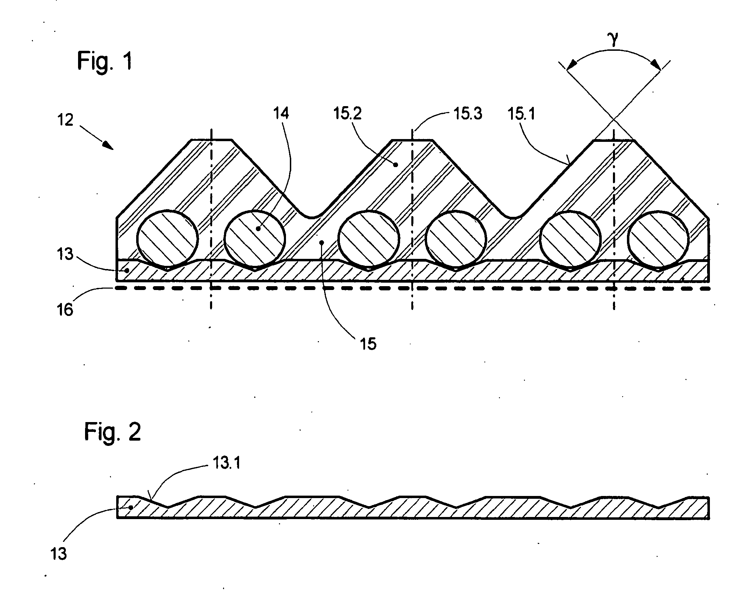

Fig. 2 zeigt einen ersten Teilriemen 13 aus Polyamid. Dieser weist V-förmige Rillen 13.1 auf. Ein solcher Riemen kann beispielsweise mittels Extrusion hergestellt werden, wobei die Rillen 13.1 vorteilhaft bereits beim Urformprozess ausgebildet werden. Um die Biegebelastung des ersten Teilriemens beim Umlaufen von Riemenrädern so gering wie möglich zu halten, weist dieser eine Dicke von höchstens 2 mm oder von höchstens einem Drittel der gesamten Riemendicke auf.

Zur Herstellung eines Riemen 12 nach einer Ausführung der vorliegenden Erfindung wird zunächst in den Rillen 13.1 des in Fig. 2 dargestellten ersten Teilriemens 13 Je ein Zugträger 14 angeordnet. Der Zugträger ist in nicht näher dargestellter Weise als Cord aus einem Drahtseil oder aus Drahtlitzen ausgebildet, die ihrerseits aus einzelnen miteinander verseilten Einzeldrähten aus Stahl aufgebaut sind.

Sofern mit demselben ersten Teilriemen als Plattform verschiedene Riemen mit unterschiedlichen Zugfestigkeiten hergestellt werden sollen, ist es nicht notwendig, in jeder Rille einen Zugträger anzuordnen. So kann beispielsweise jede zweite Rille freigelassen werden, was mit dem gleichen ersten Teilriemen einen Aufzugriemen mit im Wesentlichen der halben Zugfestigkeit, aber höherer Flexibilität ergibt. Die Verwendbarkeit gleicher erster Teilriemen für unterschiedliche Aufzugriemen verringert vorteilhaft die Kosten für Werkzeuge, Lagerhaltung etc.

Die Zugträger 14 werden mit einer leichten Vorspannung von oben in die V-förmigen Rillen 13.1 gepresst, wodurch diese sich elastisch verformen und im Wesentlichen die Kontur der Zugträger annehmen. In einem nachfolgenden, nicht näher erläuterten Teilschritt des Herstellungsverfahrens kann der erste Teilriemen auch soweit erwärmt werden, dass der thermoplastische Kunststoff wieder soweit plastifiziert wird, dass sich die Rillen den Zugträgern unter plastischer Verformung anpassen. Gleichermaßen können in einer anderen Ausführung eines erfindungsgemäßen Herstellungsverfahrens die Zugträger im Wesentlichen spannungsfrei in die Rillen 13.1 eingelegt werden und werden durch diese lagerichtig zueinander angeordnet. Unter Einlegen ist jedwede Art der Zuführung der Zugträger zu verstehen.

Anschließend wird der zweite Teilriemen 15 aus Polyurethan auf den ersten Teilriemen 13 mit in dessen Rillen 13.1 angeordneten Zugträgern 14 aufextrudiert. Dabei umschließt der zweite Teilriemen die noch freie Oberfläche der Zugträger und verbindet sich gleichzeitig thermisch mit dem ersten Teilriemen 13 an dessen dem zweiten Teilriemen zugewandter, nicht von Zugträgern bedeckter Oberfläche. Die Adhäsion zwischen dem zweiten Teilriemen 15 und den darin teilweise eingebetteten Zugträgern 14 ist groß genug, um die in der Aufzuganlage auftretenden Zugkräfte von einem Treibrad über den zweiten Teilriemen auf die Zugträger zu übertragen.

Fig. 1 zeigt den resultierenden Riemen 12 im Querschnitt. Der zweite Teilriemen 15 weist auf seiner dem ersten Teilriemen 13 abgewandten Seite Keilrippen 15.2 mit einem Flankenwinkel γ von 90° auf. Diese können gleichermaßen durch spanende Bearbeitung des zweiten Teilriemens oder, bevorzugt, beim Urformen des zweiten Teilriemens ausgebildet werden, indem beispielsweise das Polyurethan zwischen den ersten Teilriemen 13 und ein von diesem in Höhe des zweiten Teilriemens beabstandetes Formband der Extrudieranlage (nicht dargestellt) eingebracht wird, das ein entsprechend komplementäres Keilrippenprofil aufweist.

Üblicherweise enthält der Riemen mehrere Zugträger 14, und der erste Teilriemen 13 weist mehrere die Zugträger führende Rillen 13.1 auf, wobei die Abstände zwischen benachbarten Rillen bzw. Zugträgern so ausgeführt sind, dass jeder der Keilrippen 15.2 gleich viele Zugträger 14 zugeordnet werden können und die jeweilige Gruppe der einer Keilrippe 15.2 zugeordneten Zugträger symmetrisch zur Mittelachse 15.3 dieser Keilrippe angeordnet sind.

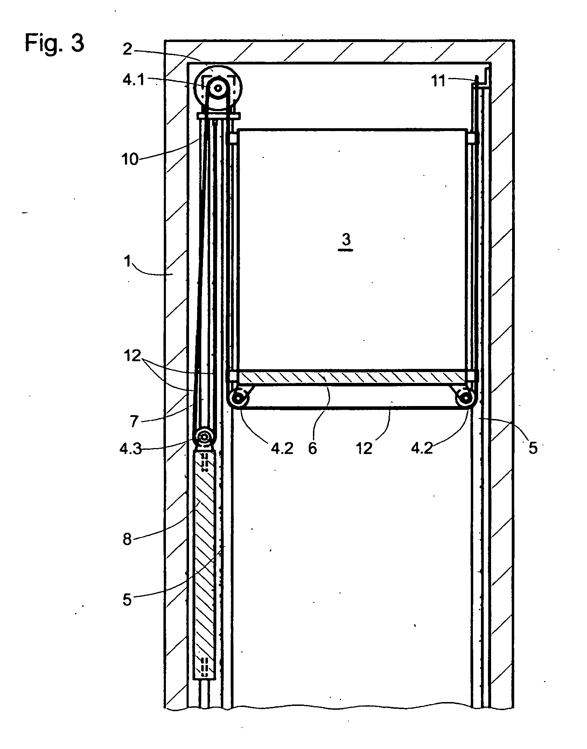

Der erste Teilriemen 13 bildet an seiner dem zweiten Teilriemen 15 abgewandten Seite (in Fig. 1 unten) eine Gleitfläche aus, die zur Umlenkung um ein Umlenkelement 4.2 (s. Fig. 3) vorgesehen ist. Diese Gleitfläche aus Polyamid weist einen geringen Reibwert und gleichzeitig eine hohe Abriebfestigkeit auf. Vorteilhaft verringert sich damit die Reibkraft, die zum Führen des Riemens auf einer Umlenkrolle zu überwinden ist, somit die seitliche Belastung des Riemens, beispielsweise durch Führungsbordscheiben von Umlenkrollen und in der Folge auch die erforderliche Antriebsleistung. Gleichzeitig verlängert sich die Lebensdauer des Riemens und des Umlenkelements.

Der zweite Teilriemen 15 bildet an seiner dem ersten Teilriemen 13 abgewandten Seite (in Fig. 1 oben) eine mit den Keilrippen 15.2 versehene Traktionsfläche aus, die zum Zusammenwirken mit einem Treibrad 4.1 (s. Fig. 3) vorgesehen ist. Sofern ein anderer Reibwert als der durch das Polyurethan des zweiten Teilriemens 15 gegebene erwünscht ist, kann der Riemen auf seiner Traktionsfläche eine Beschichtung (nicht dargestellt) aufweisen. Beispielsweise können die in Kontakt mit einem korrespondierenden Keilrippenprofil des Treibrades kommenden Flanken der Keilrippen 15.2 mit einer dünnen Polyamidfolie beschichtet sein. Zur Vereinfachung der Herstellung kann gleichermaßen auch die gesamte Traktionsfläche mit einer solchen Folie beschichtet sein.

In einer weiteren Ausführung der vorliegenden Erfindung umfasst der Riemen 12 einen dritten Teilriemen 16 aus Polyethylen, der auf der dem zweiten Teilriemen 15 abgewandten Seite des ersten Teilriemens 13 angeordnet ist. In Fig. 1 ist diese weitere Ausführung bzw. der dritte Teilriemen 16, der sie von der vorher beschriebenen Ausführung unterscheidet, gestrichelt angedeutet.

Fig. 3 zeigt schematisch einen Schnitt durch ein in einem Aufzugsschacht 1 installiertes Aufzugssystem nach einer Ausführung der vorliegenden Erfindung. Das Aufzugssystem umfasst einen in einem Aufzugsschacht 1 fixierten Antrieb 2 mit einem Treibrad 4.1, eine an Kabinenführungsschienen 5 geführte Aufzugskabine 3 mit unterhalb des Kabinenbodens 6 angebrachten Umlenkrollen in Form von Kabinentragrollen 4.2, ein an Gegengewichtsführungsschienen 7 geführtes Gegengewicht 8 mit einer weiteren Umlenkrolle in Form einer Gegengewichtstragrolle 4.3, und den Riemen 12 für die Aufzugskabine 3 und das Gegengewicht 8, der die Antriebskraft von dem Treibrad 4.1 der Antriebseinheit 2 auf die Aufzugskabine und das Gegengewicht überträgt.

Der Riemen 12 ist an einem seiner Enden unterhalb des Treibrades 4.1 an einem ersten Riemenfixpunkt 10 befestigt. Von diesem aus erstreckt er sich abwärts bis zu der Gegengewichtstragrolle 4.3, umschlingt diese und erstreckt sich von dieser aus zum Treibrad 4.1, umschlingt diese und verläuft entlang der gegengewichtsseitigen Kabinenwand abwärts, umschlingt auf beiden Seiten der Aufzugskabine je eine unterhalb der Aufzugskabine 3 angebrachte Kabinentragrolle 4.2 um je 90° und verläuft entlang der dem Gegengewicht 8 abgewandten Kabinenwand aufwärts zu einem zweiten Riemenfixpunkt 11.

Die Ebene des Treibrades 4.1 kann rechtwinklig zur gegengewichtsseitigen Kabinenwand angeordnet sein und ihre Vertikalprojektion kann außerhalb der Vertikalprojektion der Aufzugskabine 3 liegen. Es ist daher zu bevorzugen, dass das Treibrad 4.1 einen geringen Durchmesser aufweist, damit der Abstand zwischen der linksseitigen Kabinenwand und der dieser gegenüber liegenden Wand des Aufzugsschachts 1 möglichst klein sein kann. Außerdem ermöglicht ein geringer Treibraddurchmesser die Verwendung eines getriebelosen Antriebsmotors mit relativ geringem Antriebsdrehmoment als Antriebseinheit 2.

Das Treibrad 4.1 und die Gegengewichtstragrolle 4.3 sind an ihrer Peripherie mit Rillen versehen, die mit den Rippen 15.2 des Riemens 12 korrespondieren. Wo der Riemen 12 eines der Riemenräder 4.1 oder 4.3 umschlingt, liegen die auf seiner Traktionsfläche angeordneten Rippen in korrespondierenden Rillen des Riemenrades, wodurch eine ausgezeichnete Führung des Riemens auf diesen Riemenrädern gewährleistet ist. Außerdem kann durch eine zwischen den Rillen des als Treibrad dienenden Riemenrades 4.1 und den Rippen des Riemens 12 entstehende Keilwirkung die Traktionsfähigkeit verbessert werden.

In einer nicht dargestellten weiteren Ausführung weisen auch die Gleitfläche des Riemens 12 und die Kabinentragrollen 4.2 korrespondierende Keilrippen auf. Bei der Umschlingung der Kabinentragrollen 4.2 unterhalb der Aufzugskabine 3 ist daher im Gegensatz zu herkömmlichen Aufzuganlagen auch eine seitliche Führung zwischen den Kabinentragrollen 4.2 und dem Riemen 12 gegeben, da der Riemen auch Rippen auf seiner den Kabinentragrollen 4.2 zugewandten Seite aufweist.

## Patentansprüche

1. Verfahren zur Herstellung eines Riemens (12), der vorgesehen ist als Antriebs- und/oder Tragriemen (12) in einem Aufzugssystem, mit den Schritten:
- Herstellen eines ersten rückseitigen Teilriemens (13), der mit einer Anordnung von sich in Längsrichtung des Riemens erstreckenden Rillen (13.1) ausgebildet wird;
- Anordnen von Zugträgern (14) in wenigstens einigen dieser Rillen (13.1) des ersten Teilriemens (13);
- Herstellen eines zweiten, traktionsseitigen Teilriemens (15), dessen dem ersten Teilriemen abgewandte Seite als Traktionsfläche (15.1) mit mehreren Keilrippen (15.2) für das Zusammenwirken des Riemens (12) mit einem Treibrad (4.1) ausgebildet wird, wobei für den erste Teilriemen (13) und den zweite Teilriemen (15) unterschiedliche Materialien verwendet werden; und
- Verbinden des zweiten Teilriemens (15) mit dem ersten, Zugträger (14) aufweisenden Teilriemen (13) derart, dass die Zugträger (14) im Inneren des Riemens (12) aufgenommen werden und jeder Rippe (15.2) des zweiten, traktionsseitigen Teilriemens (15) wenigstens eine Rille (13.1) mit einem Zugträger (14) des ersten Teilriemens (13) zugeordnet wird.

2. Verfahren nach Anspruch 1, wobei der erste Teilriemen (13) aus einem thermoplastischen Kunststoff hergestellt wird.

3. Verfahren nach Anspruch 2, wobei der erste Teilriemen (13) insbesondere aus Polyamid (PA), Polypropylen (PP), Polyethylen (PE), Polycarbonat (PC) oder Polyvinylchlorid (PVC) oder Polyblend und/oder aus einem Gewebe aus einem solchen thermoplastischen Kunststoff hergestellt wird.

4. Verfahren nach einem der vorhergehenden Ansprüche, wobei die Rillen (13.1) durch thermische und/oder mechanische Verformung oder Bearbeitung des ersten Teilriemens (13) ausgebildet werden.

5. Verfahren nach einem der vorhergehenden Ansprüche, wobei die Zugträger (14) als Litze oder Seil aus einzelnen Stahldrähten und/oder Kunststofffasern hergestellt werden.

6. Verfahren nach einem der vorhergehenden Ansprüche, wobei der zweite Teilriemen (15) aus einem Elastomer, insbesondere Polyurethan (PU), Polychloropren (CR) oder Ethylen-Propylen-Dien-Kautschuk (EPDM), hergestellt wird.

7. Verfahren nach Anspruch 6, wobei Elastomere mit einer Härte von 70 bis 100 Shore (A), bevorzugt 75 bis 95 Shore (A) und besonders bevorzugt eine Härte von 80 bis 85 Shore (A) verwendet werden.

8. Verfahren nach einem der vorhergehenden Ansprüche, wobei der zweite Teilriemen (15) mit dem ersten Teilriemen mittels Extrusion und/oder Kleben verbunden wird.

9. Verfahren nach einem der vorhergehenden Ansprüche, wobei auf der dem zweiten Teilriemen (15) abgewandten Seite des ersten Teilriemens ein dritter Teilriemen (16), insbesondere aus einem thermoplastischen Kunststoff, insbesondere Polyamid (PA), Polypropylen (PP), Polyethylen (PE), Polycarbonat (PC) oder Polyvinylchlorid (PVC) oder Polyblend und/oder einem Gewebe aus einem solchen thermoplastischem Kunststoff angeordnet wird.

10. Verfahren nach einem der vorhergehenden Ansprüche, wobei die Keilrippen (15.2) des zweiten Teilriemens (15) zum Zusammenwirken mit korrespondierenden Rillen des Treibrades (4.1) der Aufzuganlage ausgebildet werden und die Keilrippen (15.2) insbesondere mit einem Flankenwinkel im Bereich von 60° bis 120° und bevorzugt im Bereich von 80° bis 100° versehen werden.

11. Verfahren nach einem der vorhergehenden Ansprüche, wobei die Abstände zwischen benachbarten Rillen (13.1) bzw. Zugträgern (14) des ersten Teilriemens so ausgeführt werden, dass beim Verbinden der beiden Teilriemen (13, 15) jeder Keilrippe (15.2) des zweiten Teilriemens (15) gleich viele Zugträger (14) zugeordnet werden, und die jeweilige Gruppe der einer Keilrippe (15.2) zugeordneten Zugträger (14) symmetrisch zur Mittelachse (15.3) dieser Keilrippe (15.2) angeordnet werden.

12. Verfahren nach Anspruch 12, wobei der zweite Teilriemen mit mindestens zwei Keilrippen (15.2) hergestellt wird und beim Verbinden der beiden Teilriemen (13, 15) jeder Keilrippe (15.2) des zweiten traktionsseitigen Teilriemens (15) genau ein Zugträger (14) in einer Rille (13.1) oder genau zwei Zugträgern (14) in zwei Rillen (13.1) des ersten Teilriemens (13) zugeordnet werden.

13. Verfahren nach einem der vorergehenden Ansprüche, wobei die Traktionsfläche (15.1) mit einer Beschichtung versehen wird.

14. Verfahren nach einem der vorhergehenden Ansprüche, wobei die dem traktionsseitigem zweiten Teilriemen (15) abgewandte Seite des Riemens (12) als Gleitfläche zum Zusammenwirken mit einer Umlenkrolle (4.2) der Aufzuganlage ausgebildet wird.

15. Antriebs- und/oder Tragriemen (12) für eine Aufzuganlage, der nach einem Verfahren nach einem der vorhergehenden Ansprüche hergestellt ist und folgende Komponenten aufweist:
- einen ersten rückseitigen Teilriemen (13), dessen eine Seite eine Anordnung von sich in Längsrichtung des Riemens erstreckende Rillen (13.1) aufweist;
- wobei wenigstens in einigen dieser Rillen (13.1) Zugträger (14) angeordnet sind;
- einen zweiten traktionsseitigen Teilriemen (15), der traktionsseitig mit mehreren Keilrippen (15.2) für das Zusammenwirken mit einem Treibrad (4.1) des Aufzugssystems versehen ist, und der mit dem ersten Teilriemen (13) derart verbunden ist, dass die Zugträger (14) im Inneren des Riemens (12) aufgenommen sind;
- wobei jeder Rippe (15.2) des zweiten, traktionsseitigen Teilriemens (15) wenigstens eine Rille (13.1) mit einem Zugträger (14) des ersten Teilriemens (13) zugeordnet ist;
- und wobei die zwei Teilriemen aus unterschiedlichen Materialien gefertigt sind, die sich wenigstens bezüglich einer Eigenschaft, insbesondere bezüglich ihrer Härte und/oder ihres Reibwertes und/oder ihrer Abriebfestigkeit unterscheiden.

16. Aufzugsriemen nach Anspruch 15, wobei der erste Teilriemen (13) auf seiner den Rillen (13.1) gegenüberliegenden Seite als Gleitschicht ausgebildet ist.

17. Aufzugsriemen nach Anspruch 15 oder 16, wobei der erste Teilriemen (13) eine Dicke aufweist, die maximal ein Drittel der gesamten Riemendicke ausmacht.

18. Aufzugsanlage mit einer Aufzugkabine (3), einem Antrieb (2) mit einer Treibscheibe (4.1) und einer Riemenanordnung mit wenigstens einem Antriebs- und/oder Tragriemen (12) nach Anspruch 15, wobei die Treibscheibe (4.1) an ihrer Peripherie mit Rillen versehen ist, die mit den Rippen (15.2) des Riemens (12) in Keilwirkung korrespondieren.

19. Aufzugsanlage nach Anspruch 18, wobei die Keilrippen (15.2) insbesondere einen Flankenwinkel im Bereich von 60° bis 120° und bevorzugt im Bereich von 80° bis 100° aufweisen.

## Claims

1. Method of manufacturing a belt (12) which is provided as drive and/or suspension belt (12) in an elevator system, with the steps:
- Manufacture of a first back-side belt-part (13) which is embodied with an arrangement of grooves (13.1) which extend in the lengthwise direction of the belt;
- Arrangement of tension bearers (14) in at least some of these grooves (13.1) of the first belt-part (13);
- Manufacture of a second, traction-side belt-part (15), whose side that faces away from the first belt-part is embodied as a traction surface (15.1) with a plurality of V-ribs (15.2) for interaction of the belt (12) with a drive sheave (14.1), wherein for the first belt-part (13) and the second belt-part (15) different materials are used; and
- Joining of the second belt-part (15) with the first belt-part (13), which has tension bearers (14), in such manner that the tension bearers (14) are accommodated in the inside of the belt (12) and that, allocated to each rib (15.2) of the second, traction-side belt-part (15), is at least one rib (13.1) with a tension bearer (14) of the first belt-part (13).

2. Method according to Claim 1, wherein the first belt-part (13) is manufactured from a thermoplastic plastic.

3. Method according to Claim 2, wherein the first belt-part (13) is in particular manufactured from polyamide (PA), polypropylene (PP), polyethylene (PE), polycarbonate (PC), or polyvinylchloride (PVC), or polyblend, and/or from a fabric of such a thermoplastic plastic.

4. Method according to one of the foregoing claims, wherein the grooves (13.1) are embodied by thermal and/or mechanical deformation or processing of the first belt-part (13).

5. Method according to one of the foregoing claims, wherein the tension bearers (14) are manufactured as strand or rope from individual steel wires and/or plastic fibers.

6. Method according to one of the foregoing claims, whereby the second belt-part (15) is manufactured from an elastomer, in particular polyurethane (PU), polychloroprene (CR), or ethylene propylene diene rubber (EPDM).

7. Method according to Claim 6, wherein elastomers with a hardness of 70 to 100 Shore (A), preferably 75 to 95 Shore (A), and particularly preferably a hardness of 80 to 85 Shore (A), are used.

8. Method according to one of the foregoing claims, wherein the second belt-part (15) is joined to the first belt-part by means of extrusion and/or adhesive bonding.

9. Method according to one of the foregoing claims wherein, arranged on the side of the first belt-part that faces away from the second belt-part (15), is a third belt-part (16) which is in particular made of a thermoplastic plastic, in particular polyamide (PA), polypropylene (PP), polyethylene (PE), polycarbonate (PC), or polyvinylchloride (PVC), or polyblend, and/or a fabric of such a thermoplastic plastic.

10. Method according to one of the foregoing claims, wherein the V-grooves (15.2) of the second belt-part (15) are embodied to interact with corresponding grooves of the drive sheave (4.1) of the elevator system, and the V-grooves (15.2) are in particular provided with a flank angle in the range from 60° to 120° and preferably in the range from 80° to 100°.

11. Method according to one of the foregoing claims, wherein the distances between adjacent grooves (13.1) or tension bearers (14) respectively of the first belt-part are executed in such manner that, on joining of the two belt-parts (13, 15) to each V-rib (15.2) of the second belt-part (15), equal numbers of tension bearers (14) are allocated, and the respective Group of the tension bearers (14) that are allocated to a V-rib (15.2) are arranged symmetrically to the center axis (15.3) of this V-rib (15.2).

12. Method according to Claim 12, wherein the second belt-part is manufactured with at least two V-ribs (15.2) and, on joining of the two belt-parts (13, 15), exactly one tension bearer (14) in one groove (13.1), or exactly two tension bearers (14) in two grooves (13.1), of the first belt-part (13) are allocated to each V-rib (15.2) of the second traction-side belt-part (15).

13. Method according to one of the foregoing claims, wherein the traction surface (15.1) is provided with a coating.

14. Method according to one of the foregoing claims, wherein the side of the belt (12) that faces away from the traction-side second belt-part (15) is embodied as a sliding surface for the purpose of interacting with a diverting pulley (4.2) of the elevator system.

15. Drive and/or suspension belt (12) for an elevator system which is manufactured according to a method according to one of the foregoing claims and has the following components:
- a first back-side belt-part (13) of which one side has an arrangement of grooves (13.1) which extend in the lengthwise direction of the belt;
- wherein in at least some of these grooves (13.1) tension bearers (14) are arranged;
- a second traction-side belt-part (15) which, on the traction side, is provided with a plurality of V-ribs (15.2) for the interaction with a drive sheave (4.1) of the elevator system and which is joined with the first belt-part (13) in such manner that the tension bearers (14) are accommodated in the inside of the belt (12);
- wherein to each rib (15.2) of the second, traction-side belt-part (15), at least one groove (13.1) with one tension bearer (14) of the first belt-part (13) is allocated;
- and wherein the two belt-parts are made of different materials which, at least with respect to one characteristic, in particular with respect to their hardness and/or their coefficient of friction and/or their abrasion resistance, differ.

16. Elevator belt according to Claim 15, wherein the first belt-part (13) on its side that is opposite the grooves (13.1) is embodied as a sliding layer.

17. Elevator belt according to Claim 15 or 16, wherein the first belt-part (13) has a thickness that makes up at maximum one third of the entire belt thickness.

18. Elevator system with an elevator car (3), a drive (2) with a traction sheave (4.1) and a belt arrangement with at least one drive and/or suspension belt (12) according to Claim 15, wherein the traction sheave (4.1) at its periphery is provided with grooves, which in their wedge action correspond with the ribs (15.2) of the belt (12).

19. Elevator system according to Claim 18, wherein the V-ribs (15.2) in particular have a flank angle in the range from 60° to 120° and preferably in the range from 80° to 100°.

## Revendications

1. Procédé pour fabriquer une courroie (12) qui est prévue comme courroie d'entraînement et/ou de suspension (12) dans un système d'ascenseur, avec les étapes qui consistent :
- à fabriquer une première partie de courroie côté arrière (13) qui est pourvue d'un agencement de rainures (13.1) s'étendant dans le sens longitudinal de la courroie ;
- à disposer des supports de traction (14) dans quelques-unes au moins de ces rainures (13.1) de la première partie de courroie (13) ;
- à fabriquer une deuxième partie de courroie côté traction (15) dont la face opposée à la première partie de courroie est conçue comme une surface de traction (15.1) avec plusieurs nervures cunéiformes (15.2) pour la coopération de la courroie (12) avec une poulie motrice (4.1), étant précisé qu'on utilise pour la première partie de courroie (13) et la deuxième (15) des matériaux différents ; et
- à relier la deuxième partie de courroie (15) à la première partie de courroie (13) comportant des supports de traction (14), de telle sorte que les supports de traction (14) soient logés à l'intérieur de la courroie (12) et qu'à chaque nervure (15.2) de la deuxième partie de courroie côté traction (15) soit associée au moins une rainure (13.1) avec un support de traction (14) de la première partie de courroie (13).

2. Procédé selon la revendication 1, étant précisé que la première partie de courroie (13) est fabriquée en matière thermoplastique.

3. Procédé selon la revendication 2, étant précisé que la première partie de courroie (13) est fabriquée en particulier en polyamide (PA), en polypropylène (PP), en polyéthylène (PE), en polycarbonate (PC) ou en poly(chlorure de vinyle) (PVC) ou en mélange polymère et/ou en tissu composé d'une matière plastique de ce type.

4. Procédé selon l'une des revendications précédentes, étant précisé que les rainures (13.1) sont formées par déformation thermique et/ou mécanique ou par traitement de la première partie de courroie (13).

5. Procédé selon l'une des revendications précédentes, étant précisé que les supports de traction (14) sont fabriqués sous la forme de torons ou de câbles composés de fils métalliques ou de fibres en matière plastique individuels.

6. Procédé selon l'une des revendications précédentes, étant précisé que la deuxième partie de courroie (15) est fabriquée en élastomère, en particulier en polyuréthanne (PU), en polychloroprène (CR) ou en caoutchouc éthylène propylène diène (EPDM).

7. Procédé selon la revendication 6, étant précisé qu'on utilise des élastomères d'une dureté de 70 à 100 Shore(A), de préférence de 75 à 95 Shore(A), et plus spécialement d'une dureté de 80 à 85 Shore(A).

8. Procédé selon l'une des revendications précédentes, étant précisé que la deuxième partie de courroie (15) est reliée à la première par extrusion et/ou par collage.

9. Procédé selon l'une des revendications précédentes, étant précisé que sur la face de la première partie de courroie opposée à la deuxième partie de courroie (15), on dispose une troisième partie de courroie (16), en particulier en matière thermoplastique, en particulier en polyamide (PA), en polypropylène (PP), en polyéthylène (PE), en polycarbonate (PC) ou en poly(chlorure de vinyle) (PVC) ou en mélange polymère et/ou en tissu composé d'une matière thermoplastique de ce type.

10. Procédé selon l'une des revendications précédentes, étant précisé que les nervures cunéiformes (15.2) de la deuxième partie de courroie (15) sont conçues pour coopérer avec des rainures correspondantes de la poulie motrice (4.1) de l'installation d'ascenseur, et que lesdites nervures cunéiformes (15.2) sont dotées en particulier d'un angle de flancs situé dans la plage de 60° à 120° et de préférence dans la plage de 80° à 100°.

11. Procédé selon l'une des revendications précédentes, étant précisé que les écartements entre des rainures (13.1) voisines ou des supports de traction (14) voisins prévus sur la première partie de courroie sont conçus pour que lorsqu'on relie les deux courroies partielles (13, 15), un même nombre de supports de traction (14) soit associé à chaque nervure cunéiforme (15.2) de la deuxième partie de courroie (15) et que le groupe de supports de traction (14) associés à chaque nervure cunéiforme (15.2) soit disposé symétriquement par rapport à l'axe médian (15.3) de cette nervure cunéiforme (15.2).

12. Procédé selon la revendication 12, étant précisé que la deuxième partie de courroie est fabriquée avec au moins deux nervures cunéiformes (15.2) et que lors de la liaison des deux courroies partielles (13, 15), on associe à chaque nervure cunéiforme (15.2) de la deuxième partie de courroie côté traction (15) exactement un support de traction (14) dans une rainure (13.1) ou exactement deux supports de traction (14) dans deux rainures (13.1) de la première partie de courroie (13).

13. Procédé selon l'une des revendications précédentes, étant précisé que la surface de traction (15.1) est pourvue d'un revêtement.

14. Procédé selon l'une des revendications précédentes, étant précisé que la face de la courroie (12) opposée à la deuxième partie de courroie côté traction (15) est conçue comme une surface lisse pour coopérer avec une poulie de déviation (4.2) de l'installation d'ascenseur.

15. Courroie d'entraînement et/ou de suspension (12) pour une installation d'ascenseur, qui est fabriquée selon un procédé selon l'une des revendications précédentes et qui comporte les composants suivantes :
- une première partie de courroie côté arrière (13) dont une face présente un agencement de rainures (13.1) s'étendant dans le sens longitudinal de la courroie ;
- étant précisé que des supports de traction (14) sont disposés dans quelques-unes au moins de ces rainures (13.1) ;
- une deuxième partie de courroie côté traction (15) qui est pourvue, côté traction, de plusieurs nervures cunéiformes (15.2) pour coopérer avec une poulie motrice (4.1) du système d'ascenseur et qui est reliée à la première partie de courroie (13) de telle sorte que les supports de traction (14) soient logés à l'intérieur de la courroie (12) ;
- étant précisé qu'au moins une rainure (13.1) avec un support de traction (14) de la première partie de courroie (13) est associée à chaque nervure (15.2) de la deuxième partie de courroie côté traction (15) ;
- et que les deux parties de courroie sont fabriquées à partir de matériaux différents qui se distinguent au moins par une propriété, en particulier par leurs duretés et/ou leurs coefficients de friction et/ou leurs résistances à l'usure.

16. Courroie d'ascenseur selon la revendication 15, étant précisé que la première partie de courroie (13), sur sa face opposée aux rainures (13.1), est conçue comme une couche lisse.

17. Courroie d'ascenseur selon la revendication 15 ou 16, étant précisé que la première partie de courroie (13) a une épaisseur qui représente au maximum un tiers de l'épaisseur totale de la courroie.

18. Installation d'ascenseur avec une cabine d'ascenseur (3), un entraînement (2) avec une poulie motrice (4.1) et un dispositif à courroie avec au moins une courroie d'entraînement et/ou de suspension (12) selon la revendication 15, étant précisé que la poulie motrice (4.1) est pourvue sur sa périphérie de rainures qui correspondent, dans une action de coincement, aux nervures (15.2) de la courroie (12).

19. Installation d'ascenseur selon la revendication 18, étant précisé que les nervures cunéiformes (15.2) présentent en particulier un angle de flancs situé dans la plage de 60° à 120° et de préférence dans la plage de 80° à 100°.
